# EUROPÄISCHE PATENTSCHRIFT

(11) **EP 0 225 287 B1**
(45) Veröffentlichungstag und Bekanntmachung des Hinweises auf die Patenterteilung: **19.09.1990**
(21) Anmeldenummer: 86810528.9
(22) Anmeldetag: 19.11.1986
(51) Int. Cl.: C09B 67/46, D06L 3/12, B01F 3/12, C09B 67/22, C09B 67/38

(54) **Lagerstabile Präparate von in Wasser unlöslichen bis schwerlöslichen Feststoffen**
Storage-stable preparations of solids slightly soluble to insoluble in water
Préparations stables au stockage de corps solides peu solubles ou insolubles dans l'eau

(30) Priorität: 25.11.1985 CH 5020/85
(43) Veröffentlichungstag der Anmeldung: 10.06.1987
(73) Patentinhaber: CIBA-GEIGY AG, 4002 Basel (CH)
(72) Erfinder: Burglin, Marc, F-68390 Battenheim (FR); Putzar, Roland, Dr., CH-4114 Hofstetten (CH)

(56) Entgegenhaltungen:
- EP-A- 0 007 604
- CH-A- 638 239
- DE-A- 2 628 445
- FR-A- 2 323 435
- FR-A- 2 388 029
- GB-A- 2 004 922
- US-A- 3 067 053

## Beschreibung

Die Erfindung betrifft lagerstabile Präparate von in Wasser unlöslichen bis schwerlöslichen Feststoffen sowie deren Verwendung, im Fall von Farbstoffen als Feststoffe zum Färben und Bedrucken von Leder, Holz, Papier oder insbesondere Textilmaterialien, wobei diese Präparate vor der Verwendung durch Elektrolytzugabe zunächst verflüssigt werden und dann wie bekannte Flüssigpräparate gehandhabt werden können.

Flüssige Präparate, Lösungen oder Dispersionen, weisen gegenüber den Pulverformen eine Reihe von Vorteilen auf, z.B. keine Staubentwicklung, keine Benetzungsprobleme durch Klumpenbildung, bei Farbstoffpräparaten z.B. keine fleckigen Färbungen durch ungenügend gelöste oder nicht genügend feinverteilte Farbstoffteilchen und nicht zuletzt eine leichte Dosierbarkeit in automatischen Anlagen.

Die Haltbarkeit von Flüssigpräparaten ist jedoch bei der Lagerung über längere Zeiträume oft nur unbefriedigend, verglichen mit entsprechend formulierten Pulvern oder Granulaten. Zum Beispiel beobachtet man nicht selten bei Farbstoffen eine Aenderung der Farbstärke im Vertikalprofil der Farbstoffbehälter bis hin zur Bildung von Agglomeraten oder eines Sediments, das sich nur noch mit Mühe aufrühren lässt. Nicht hinreichend dispergierte Farbstoffpartikel ergeben jedoch nicht nur fleckige Färbungen, sondern führen beispielsweise bei deren Verwendung im Textildruck zu einem Verstopfen der Schablonen.

Um dieses Problem zu lösen, wurden in der Vergangenheit eine Vielzahl der unterschiedlichsten Formulierungen entwickelt. Danach hat man die Problemlösung bislang in einer Auswahl spezifischer Dispergiermittel oder Dispergiermittelgemische gesucht. Verwendet wurden in erster Linie anionische Dispergiermittel, wie Naphthalinsulfonsäure-Formaldehydkondensate, Ligninsulfonate, Alkyl- bzw. Arylsulfonate oder kernsulfonierte aromatische Polyäther (DE-A-22 44 777). Auch nichtionische Dispergatoren vom Typ der Aethylenoxid-Propylenoxid-Copolymerisate oder die grosse Gruppe der Aethylenoxid/Propylenoxid-Addukte, sowie Mischungen anionischer und nichtionischer Dispergatoren wurden als Hilfsmittel zur Herstellung lagerstabiler Dispersionsfarbstofformulierungen und Pigmentpräparaten herangezogen (siehe z.B. DE-A-27 57 330, DE-B-25 02 839 oder GB-A-20 37 819).

Je nach Farbstoff z.B. werden jedoch nicht immer befriedigende Ergebnisse erzielt, bzw. es müssen bei besonders stark zum Sedimentieren neigenden Farbstoffen erst durch aufwendige Vorversuche die geeigneten Dispergiermittel ausgewählt werden.

Gefunden wurde nun, dass sich auf einfache Art und Weise lagerstabile flüssige Präparate von Feststoffen herstellen lassen, wenn man der wässrigen dispergatorhaltigen Feststoffdispersion einen elektrolytempfindlichen Verdicker zusetzt, der die Viskosität der Dispersion so stark erhöht, dass es praktisch zu keinen Sedimentationserscheinungen mehr kommt. Diese Präparate sind dann problemlos über mehrere Monate unverändert haltbar und werden vor der Verwendung lediglich mit einer geringen Menge Elektrolyt versetzt, wodurch die Wirkung des Verdickers nahezu vollständig aufgehoben wird. Als Elektrolyt kommen sowohl organische, wie auch anorganische Salze in Betracht, beispielsweise Alkalimetallhalogenide oder -sulfate, wie Natriumchlorid oder Natriumsulfat; ferner die Alkalisalze anionischer Dispergiermittel oder Alkalisalze von Dispergiermittelsäuren im Gemisch mit anorganischen Salzen. Die verflüssigte Feststofformulierung läßt sich leicht dosieren und kann auch in automatischen Dosiersystemen einwandfrei gehandhabt werden.

Gegenstand der vorliegenden Erfindung sind somit lagerstabile wäßrige Präparate von in Wasser unlöslichen bis schwerlöslichen Feststoffen beliebiger Teilchengröße vorteilhaft <50 µm, die dadurch gekennzeichnet sind, daß sie neben einem Dispergator ein elektrolytempfindliches vorzugsweise synthetisches Verdickungsmittel enthalten und eine Viskosität von 1 · 103 bis 1 106 mPa· s aufweisen.

Das Phänomen der Elektrolytempfindlichkeit synthetischer Verdicker ist bekannt. Im Hinblick darauf wurden salzarme Präparate entwickelt, die mit derartigen Verdickern verträglich sind und sich auch zu entsprechenden Druckpasten verarbeiten lassen. Die im vorliegenden beschriebenen Präparate sind jedoch nicht mit Druckpasten zu verwechseln. Sie zeichnen sich vielmehr durch einen, verglichen mit üblichen Druckpasten, viel höheren Feststoffgehalt aus und stellen konzentrierte Formulierungen (Handelsformen) dar, die vor der Applikation verflüssigt werden und dann beispielsweise zum Ansetzen von Färbebädern, Klotztlotten oder auch Druckpasten dienen.

Die Viskosität der erfindungsgemäßen Präparate liegt im Bereich von 1 · 103 bis 1 · 106 mPa · s und beträgt insbesondere 1 . 103 bis 1 104 mPa · s.

Als elektrolytempfindlich synthetische Verdicker sind in erster Linie die folgenden Polymere geeignet:
- Polyacrylsäuren/Polyacrylate mit einem Molgewicht von 1 · 105 bis 1 · 107;
- Polyacrylamide oder Polymethacrylamide oder Homo- bzw. Copolymerisate aus Acrylamid und Methacrylamid oder Acrylsäure mit einem Molgewicht von 1 10⁵ bis 1 · 107;
- Copolymerisate aus Maleinsäureanhydrid und Aethylen mit einem Molgewicht von 1.10³ bis 1-107 vorzugsweise werden verwendet:
- Polyacrylsäuren/Polyacrylate mit einem Molgewicht von 5.105 bis 6.106;
- Polyacrylamide oder Polymethacrylamide oder Homo- bzw. Copolymerisate aus Acrylamid und Methacrylamid oder Acrylsäure mit einem Molgewicht von 1.106 bis 4*₁₀6;
- Copolymerisate aus Maleinsäureanhydrid und Aethylen mit einem Molgewicht von 8.10³ bis 1·106.

Die Polymere können mehr oder weniger vernetzt sein. Auch Mischungen der genannten Verdicker können verwendet werden. Bei den Polymeren handelt es sich um dem Fachmann bekannte Handelsprodukte.

Als Verdickungsmittel besonders bewährt haben sich die polymeren Acrylsäuren mit einem Molgewicht von 7_{'}105 bis 2-106. Diese ergeben bereits in geringer Konzentration ein dickflüssiges Präparat mit der gewünschten Viskosität. Natürlich können die hier beschriebenen lagerstabilen Präparate nicht nur die im einzelnen genannten Verdicker, sondern grundsätzlich jedes beliebige Verdickungsmittel enthalten, dessen viskositätserhöhende Wirkung durch Elektrolyte aufgehoben werden kann.

Eingesetzt wird der Verdicker allgemein in einer Menge von 0,001 bis 10 Gew.-% vorzugsweise 0,01 bis 10 Gew.-%, insbesondere 0,1 bis 5 Gew.-%, bezogen auf das Präparat. Geringere Mengen, als 0,001 Gew.-% Verdicker ergeben, je nach Feststoff, z.T. nicht hinreichend verdickte Präparate, während Mengen über 10 Gew.-% im allgemeinen zu keiner weiteren Stabilitätsverbesserung führen.

Als in Wasser unlösliche bis schwerlösliche Feststoffe kommen beispielsweise Farbstoffe, UV-Absorber, Textil- und Papierhilfsmittel, Schädlingsbekämpfungsmittel, Photochemikalien, Lederchemikalien, Kunststoffe sowie Kunststoffadditive in reiner oder auch verschnittener Form in Betracht. Es handelt sich bei den Farbstoffen vor allem um Dispersionsfarbstoffe und Küpenfarbstoffe der verschiedenen Klassen. Bei den Dispersionsfarbstoffen beispielsweise um Nitrofarbstoffe, Aminoketonfarbstoffe, Ketoniminfarbstoffe, Methinfarbstoffe, Nitrodiphenylaminfarbstoffe, Chinolinfarbstoffe, Aminonaphthochinonfarbstoffe, Cumarinfarbstoffe und insbesondere um Anthrachinonfarbstoffe und Azofarbstoffe, wie Monoazo- und Disazofarbstoffe.

Als Küpenfarbstoffe finden beispielsweise indigoide Farbstoffe, anthrachinoide Farbstoffe, wie z.B. Indanthren, sowie Schwefelfarbstoffe und Leukoküpenfarbstoffester Verwendung.

Unter Feststoffen sollen auch optische Aufheller verstanden werden. Es kommen z.B. in Wasser unlösliche bis schwerlösliche Aufheller der folgenden Verbindungsklassen in Frage: Stilbene, Cumarine, Benzocumarine, Pyrene, Pyrazine, Pyrazoline, Oxazine, Mono- oder Dibenzoxazolyl- oder -imidazolylverbindungen, Aryltriazol- und v-Triazol-Derivate sowie Naphthalsäureimide.

Ferner bezeichnet der Begriff wasserunlösliche Feststoffe im vorliegenden u.a. auch die grosse Gruppe der organischen und anorganischen Pigmente, wie z.B. die Azopigmente, Phthalocyaninpigmente, Isoindolin- oder Dioxazinpigmente oder auch höhermolekulare Azo-Kondensationspigmente. Bei den anorganischen Pigmenten handelt es sich beispielsweise um Weisspigmente, Eisenoxid-Chromatpigmente.

Neben dem Feststoff und dem Verdickungsmittel enthalten die Präparate einen Dispergator. In Frage kommen hier nichtionische, amphotere, anionische und kationische Dispergatoren, insbesondere aber nichtionische Dispergatoren wie z.B. Aethylenoxid-Addukte aus der Klasse der Umsetzungsprodukte von Aethylenoxid mit
a) gesättigten und/oder ungesättigten Fettalkoholen mit 6 bis 20 C-Atomen; oder
b) Alkylphenolen mit 4 bis 12 C-Atomen im Alkylrest; oder
c) gesättigten und/oder ungesättigten Fettaminen mit 14 bis 20 C-Atomen; oder
d) gesättigten und/oder ungesättigten Fettsäuren mit 14 bis 20 C-Atomen.

Als Aethylenoxid-Addukte sind im einzelnen genannt:
a) Umsetzungsprodukte von gesättigten und/oder ungesättigten Fettalkoholen mit 6 bis 20 C-Atomen, mit 5 bis 30 Mol Aethylenoxid;
b) Umsetzungsprodukte von Alkylphenolen mit 4 bis 12 C-Atomen mit 5 bis 20 Mol, vorzugsweise 8 bis 15 Mol Aethylenoxid;
c) Umsetzungsprodukte von gesättigten und/oder ungesättigten Fettaminen mit 14 bis 20 C-Atomen mit 5 bis 20 Mol Aethylenoxid;
d) Umsetzungsprodukte von gesättigten und/oder ungesättigten Fettsäuren mit 14 bis 20 C-Atomen mit 5 bis 20 Mol Aethylenoxid.

Auch Gemische der Aethylenoxid-Addukte nach a), b), c) und d) untereinander sind verwendbar. Diese Gemische erhält man durch Mischen einzelner Umsetzungsprodukte oder direkt durch Aethoxylierung eines Gemisches der den Addukten zugrunde liegenden Verbindungen.

Anstelle der reinen Aethoxylate können auch Alkoxylate verwendet werden, die man durch Umsetzung der unter a) bis d) genannten Verbindungen mit Aethylenoxid und Propylenoxid erhält.

Als gesättigte und/oder ungesättigte Fettalkohole kommen für a) Dodecanol, Palmitylalkohol, Stearylalkohol, Oelylalkohol oder Talgfettalkohole, vorzugsweise Hexanol, 2-Aethylhexanol und Decanol in Betracht.

Als Alkylphenole für b) sind Butylphenol, Hexylphenol, vor allem jedoch Isooctylphenol, p-tert.-Octylphenol, Nonylphenol und Dodecylphenol zu nennen.

Als Fettamin für c) kommt z.B. neben Stearylamin und Palmitylamin vor allem Oleylamin in Betracht.

Für d) sind als gesättigte und/oder ungesättigte Fettsäuren z.B. Palmitinsäure, vor allem Stearinsäure und Oelsäure zu nennen.

Wegen ihrer guten Dispergierwirkung und der ausgezeichneten Verträglichkeit mit synthetischen Verdickern werden bevorzugt Aethylenoxid/Propylenoxid-Blockpolymerisate verwendet und zwar insbesondere Typen mit mittelständiger Propylenoxideinheit der folgenden Formel

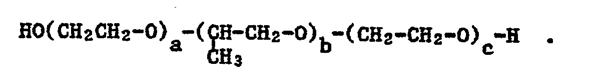

Die Summe der Indices a und c ist eine ganze Zahl zwischen 200 und 400 und der Index b steht für eine Zahl zwischen 20 und 100. Es handelt sich somit um Polymere mit einem Molekulargewicht zwischen 9,000 und 23.500. Entsprechende Dispergatoren sind im Handel erhältlich.

Desweiteren können auch Mischungen von Dispergatoren eingesetzt werden, die insbesondere neben einem nichtionischen Dispergator noch zusätzlich amphothere, anionische oder kationische Dispergatoren enthalten. In allen Fällen ist darauf zu achten, dass die Menge an Elektrolyt nicht zu einer Störung des gewünschten Verdickungseffekts führt.

Bei den anionischen Dispergatoren haben sich insbesondere Kondensationsprodukte von aromatischen Sulfonsaüren mit Formaldehyd, wie Kondensationsprodukte aus Formaldehyd und Naphthalinsulfonsäuren oder aus Formaldehyd, Naphthalinsulfonsäure und Benzolsulfonsäure, oder ein Kondensationsprodukt aus Rohkresol, Formaldehyd und Naphthalinsulfonsäure als wirksam erwiesen. Weiterhin kommen vor allem Ligninsulfonate in Betracht, z.B. solche; die nach dem Sulfit- oder Kraft-Verfahren gewonnen werden. Vorzugsweise handelt es sich um Produkte, die z.T. hydrolysiert, oxidiert oder desulfoniert und nach bekannten Verfahren fraktioniert werden, z.B. nach dem Molekulargewicht oder nach dem Sulfonierungsgrad. Auch Mischungen aus Sulfit-und Kraftligninsulfonaten sind gut wirksam. Besonders geeignet sind Ligninsulfonate mit einem durchschnittlichen Molekulargewicht zwischen 1000 und 80.000, einem Gehalt an aktivem Ligninsulfonat von mindestens 80 % und vorzugsweise mit niedrigem Gehalt an mehrwertigen Kationen. Der Sulfonierungsgrad kann in weiten Grenzen variieren. Das Verhältnis von Kohlenstoff zu organisch gebundenem Schwefel liegt beispielsweise zwischen 9:1 bis 55:1. Bevorzugt sind Produkte mit niedrigem Sulfonierungsgrad. Ferner gehören zu den bevorzugten anionischen Dispergatoren Dialkylsulfosuccinate, deren Alkylgruppen verzweigt oder unverzweigt sind und je 3 bis 10 Kohlenstoffatome aufweisen, wie z.B. Di-propylsulfosuccinat, Di-isobutylsulfosuccinat, Diamylsulfosuccinat, Bis-(2-äthylhexyl)-sulfosuccinat oder Di-octylsulfosuccinat.

Desweiteren sind sulfatierte oder sulfonierte Fettsäuren oder Fettsäureester von Fettsäuren mit 10 bis 22, vorzugsweise 12 bis 18 Kohlenstoffatomen, wie z.B. sulfatierte Oelsäure, Elaidinsäure oder Ricinolsäure bzw. deren niedere Alkylester, z.B. Aethyl-, Propyl- oder Butylester genannt. Sehr gut geeignet sind auch die entsprechenden sulfatierten oder sulfonierten Oele, wie z.B. Olivenöl, Ruböl und vor allem Ricinusöl.

Normalerweise liegen die anionischen Dispergiermittel in Form ihrer Alkalisalze, ihrer Ammoniumsalze oder ihrer wasserlöslichen Aminsalze vor. Man verwendet zweckmässigerweise elektrolytarme Qualitäten.

Von den kationischen Dispergatoren kommen zum Beispiel höhere Alkylreste aufweisende quaternäre Ammoniumverbindungen der Formel 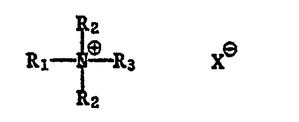 in Frage, wobei die Substituenten R₁ bis R₃ und das Symbol X⁹ die folgende Bedeutung haben:
R₁ ein gesättigter und/oder ungesättigter Alkylrest mit 8 bis 22 Kohlenstoffatomen;
R₂ unabhängig voneinander jeweils ein Alkylrest mit 1 bis 4 Kohlenstoffatomen oder eine Polyalkylenoxidkette mit 3 mit 30 Aethylenoxid- und/oder Propylenoxideinheiten oder Aethylenoxid- und Styroloxideinheiten;
R₃ ein gegebenenfalls durch eine Hydroxy-, Methoxy- oder Aethoxygruppe oder durch einen Carbamoyl- oder Phenylrest substituierter Alkylrest mit 1 bis 4 Kohlenstoffatomen;
X^{e} das Anion einer organischen oder anorganischen Säure, wie z.B. Chlorid, Bromid, Sulfat oder Methosulfat.

Derartige Verbindungen sind bekannt oder nach bekannten Verfahren zugänglich, beispielsweise durch Umsetzen eines Fettamins oder einer Mischung von Fettaminen, wie beispielsweise Kokosfettamin mit Aethylenoxid und/oder Propylenoxid und anschliessendes Quaternieren des so erhaltenen Alkoxylats z.B. mit Dimethylsulfat (siehe z.B. H. Stache, Tensid-Taschenbuch; Carl Hanser Verlag 1981).

Als quatemäre Fettaminalkoxylate; sind beispielsweise die folgenden genannt: Mit Chloracetamid quaterniertes Anlagerungsprodukt von 8 Mol Aethylenoxid an 1 Mol Talgfettamin;

mit Dimethylsulfat quaterniertes Anlagerungsprodukt von 30 Mol Aethylenoxid an 1 Mol eines C₁₈-C₂₂-Fettamins;
mit Dimethylsulfat quaterniertes Anlagerungsprodukt von 30 Mol Aethylenoxid an 1 Mol Laurylamin;
mit Dimethylsulfat quaterniertes Anlagerungsprodukt von 15 Mol Aethylenoxid an 1 Mol Laurylamin;
mit Dimethylsulfat quaterniertes Anlagerungsprodukt von 15 Mol Aethylenoxid an 1 Mol Stearylamin;
mit Dimethylsulfat quaterniertes Anlagerungsprodukt von 1 Mol Styroloxid und 30 Mol Aethylenoxid an 1 Mol Stearylamin;
mit Dimethylsulfat quaterniertes Anlagerungsprodukt von 6 Mol Propylenoxid und 30 Mol Aethylenoxid an 1 Mol Caprylamin;
mit Dimethylsulfat quaterniertes Anlagerungsprodukt von 1 Mol Styroloxid und 20 Mol Aethylenoxid an 1 Mol Stearylamin;

Neben den rein anionischen bzw. kationischen Dispergatoren kommen auch amphotere Dispergatoren in Betracht. Beispielhaft genannt sind die folgenden Verbindungen:
Ammoniumsalz des sauren Monoschwefelsäureesters des Anlagerungsproduktes von 2,5 Mol Aethylenoxid an 1 Mol Talgfettamin;
Ammoniumsalz des sauren Monoschwefelsäureesters des Anlagerungsproduktes von 4 Mol Aethylenoxid an 1 Mol Talgfettamin;
Ammoniumsalz des sauren Monoschwefelsäureesters des Anlagerungsproduktes von 6 Mol Aethylenoxid an 1 Mol Talgfettamin,
Ammoniumsalz des sauren Monoschwefelsäureesters des Anlagerungsproduktes von 8 Mol Aethylenoxid an 1 Mol Talgfettamin;
mit Chloracetamid quaterniertes Ammoniumsalz des amphoteren Schwefelsäureesters des Anlagerungsproduktes von 8 Mol Aethylenoxid an 1 Mol Talgfettamin;
mit Dimethylsulfat quaternisiertes Ammoniumsalz des amphoteren Schwefelsäureesters des Anlagerungsproduktes von 30 Mol Aethylenoxid an 1 Mol eines Ci8-C22-Fettamins.

Als wirksam erweisen sich ferner Dispergatoren aus der Gruppe der Aminoxide. Derartige Verbindungen zeigen je nach pH des Färbebades nichtionischen (neutrale bis basische Flotte) bzw. kationischen (saure Flotte) Charakter. In Frage kommen beispielsweise
N-Dodecyl-N,N-dimethylaminoxid
N-Myristyl-N,N-dimethylaminoxid
N-Dodecyl-N,N-di-2-hydroxyethylaminoxid
N-Hexadecyl-N,N-di-2-hydroxyethylaminoxid
N-Hexadecyl-N,N-dimethylaminoxid
N-Oleyl-N,N-di-2-hydroxyethylaminoxid
N-Stearyi-N,N-di-2-hydroxyethyiaminoxid
N-Kokosfettsäureamidopropyl-N,N-dimethylaminoxid
N-Talgfettsäureamidopropyl-N,N-dimethylaminoxid.

Ferner können in die Präparate noch weitere Zusätze, wie hydrotrope Mittel, z.B. Harnstoff oder auch Antimikrobika, z.B. Chloracetamid, Fungicide, Antischaummittel oder Sequestrierungsmittel, ferner den pH-Wert regulierende Zusätze enthalten.

Die Präparate weisen bevorzugt die folgende Zusammensetzung auf:
- 10 bis 60 Gew.-%, insbesondere 20 bis 50 Gew.-% Feststoff, vorzugsweise salzarmer Farbstoff der beispielsweise mit Hilfe eines Membrantrennverfahrens entsalzt wurde (DE-A-32 35 747),
- 0,5 bis 25 Gew.-%, insbesondere 2 bis 15 Gew.-% Dispergator oder Dispergatorgemisch,
- 0,001 bis 5 Gew.-% insbesondere 0,01; bis 1 Gew.-% synthetisches Verdickungsmittel,
- 5 bis 20 Gew.-% Feuchthaltemittel,
- 20 bis 70 Gew.-% Wasser,
sowie gegebenenfalls
- 0,1 bis 5 Gew.-% Antischaummittel, hydrotrope Mittel, Sequestrierungsmittel und/oder zum pH-Wert und damit zur Viskositätseinstellung eine Carbonsäure, z.B. Essigsäure, oder ein Alkalimetallhydroxid, z.B. Natronlauge oder Ammoniak.

Eine besonders bevorzugte Zusammensetzung enthält an Stelle der oben genannten Inhaltsstoffe 0,5 bis 15 Gew.-%, insbesondere 2 bis 10 Gew.-% nichtionischen Dispergator, 0,1 bis 10 Gew.-%, insbesondere 0,5 bis 3 Gew.-%, anionischen Dispergator und die oben beschriebenen Zusätze.

Ein weiterer Gegenstand der vorliegenden Erfindung ist das Verfahren zur Herstellung der Präparate, danach wird zweckmässigerweise der Feststoff, falls er nicht direkt in feindisperser Form anfällt, im Anschluss an die Synthese in Gegenwart eines nichtionischen, amphoteren, kationischen oder anionischen Dispergators oder eines Dispergatorgemisches einer Mahlbehandlung unterworfen. Die Mahlung erfolgt beispielsweise mit einer Rührwerks-Kugelmühle, Sandmühle oder Stiftscheibenmühle. Vor der Mahlung und/oder im Anschluß daran wird der Feststoff vorteilhaft mit Hilfe eines Membrantrennverfahrens von anorganischen Salzen und niedermolekularen Nebenprodukten befreit und bei Farbstoffen gegebenenfalls durch Aufkonzentrieren die erforderliche Farbstärke eingestellt. Anschließend werden dann gegebenenfalls eines oder mehrere der vorstehend genannten Hilfsmittel zugegeben. Das Verdickungsmittel kann vor oder nach der Mahlung eingearbeitet werden, wobei man den Verdicker im allgemeinen in Form einer homogenen wäßrigen Lösung zugesetzt. Natürlich kann man auch von handelsfertigen Flüssigformulierungen ausgehen, wie sie beispielsweise in der DE-B 2 850 482 beschrieben sind und diese lediglich mit der erforderlichen Menge an Verdickungsmittel versetzen.

Die DE-A 2 628 445 betrifft ein Verfahren zur Herstellung von Farbstoffpräparationen indem man wäßrige Mischungen von Dispersionsfarbstoffen, anionischen und/oder nichtionischen Dispergiermitteln und üblichen Verdickungsmitteln einem Mahlprozess unterwirft. Über die Viskosität derartiger Formulierungen ist nichts ausgesagt; lediglich auf Seite 4, Zeilen 7-8 wird darauf hingewiesen, daß eine 10%ige wäßrige Lösung von -Natriumpolyacrylat mit einer Viskosität von 10 000-15 000 geeignet ist. Die Viskositätsangabe bezieht sich gemäß der Erfindung auf die Gesamtformulierung und nicht auf nur eine Komponente. Es ist auch weiter nichts erwähnt, daß vor dem Gebrauch dieser Präparate die Viskosität erniedrigt werden muß, z.B. veranschaulicht die Arbeitsweise des Beispiels 1 eine Direktverdünnung mit Wasser und nicht einen Viskositätsverflüssigungsschritt. Da direkt mit Wasser verdünnt werden kann, muß es sich um niederviskose Präparationen handeln, da hochviskose Präparationen nicht ohne weiteres mit Wasser verdünnbar sind sondern erst verflüssigt werden müssen. Desweiteren findet sich auch kein Hinweis über die Lagerstabilität derartiger Formulierungen, was mit ein Kern der erfindungsgemäßen Präparate ist.

Die folgenden Beispiele dienen der Erläuterung der Erfindung; Teile bedeuten Gewichtsteile und Prozente Gewichtsprozente.

### Beispiel 1:

100 Teile Farbstoffpräparat der folgenden Zusammensetzung: 31,6 Teile Dispersionsfarbstoff mit der Formel 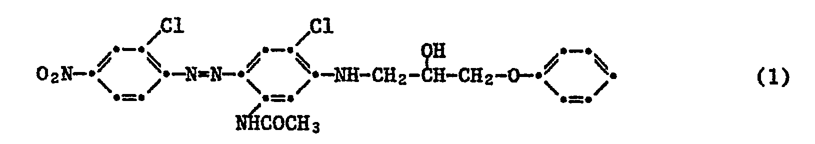
1,6 Teile Oxyligninsulfonat mit einem Kohlenstoff/Schwefelverhältnis von _{"}33:1,
4,1 Teile Aethylenoxid/Propylenoxid-Blockpolymer mit einem Molgewicht von ca. 16.000,
17,1 Teile Propylenglykol,
1,5 Teile Antimikrobikum und
44,1 Teile Wasser,
werden mit 0,3 Teilen Polyacrylsäure mit einem Molgewicht von ca. 1·10⁶ in einem Rührkessel mit Ankerrührer homogen vermischt. Die Polyacrylsäure wird in Form einer 1,5%igen wässrigen Lösung zugesetzt, dadurch steigt die Viskosität von anfangs 140 mPa.s auf 1300 mPa.s. Nach Lagern bzw. Zentrifugieren als Zeitraffertest bleibt die so verdickte Flüssigform einwandfrei homogen. Es bildet sich weder ein Sediment, noch treten Farbdifferenzen im Gefäss auf (Probeentnahme an der Oberfläche und vom Boden).

Kurz vor Gebrauch des Präparats rührt man 2,5 Teile Naphthalinsulfonsäure-Formaldehydkondensat•NaSalz mit eimem Gehalt von etwa 25 % an Natriumsulfat ein. Nach wenigen Minuten erhält man eine homogene flüssige Form, die mit 150 mPa.s praktisch die ursprüngliche Viskosität des unverdickten Präparats aufweist. Das Präparat ist gut dosierbar und kann z.B. direkt in ein Färbebad gegeben werden.

Beispiel 2: 50 Teile des verflüssigten Farbstoffpräparates gemäss Beispiel 1 werden in 1000 Teilen Wasser dispergiert. Mit dieser Flotte klotzt man ein Polyester/Baumwoll-Gewebe mit einer Flottenaufnahme von 70 %, unterwirft das Gewebe anschliessend einer Zwischentrocknung und thermosoliert dann bei 210_{°}C; man erhält so eine egale sprickelfreie rote Färbung.

Beispiel 3: Verdickt man die gleiche Zusammensetzung wie in Beispiel 1 mit 0,43 Teilen Polyacrylsäure mit einem Molgewicht von ca. 7.5•10⁵ und stellt mit Triäthanolamin auf pH 7,3, steigt die Viskosität von 150 mPa.s auf 3000 mPa.s an.

### Beispiel 4:

60 g der dispergatorarmen Formulierung
33,4 % Dispersionsfarbstoff der Formel 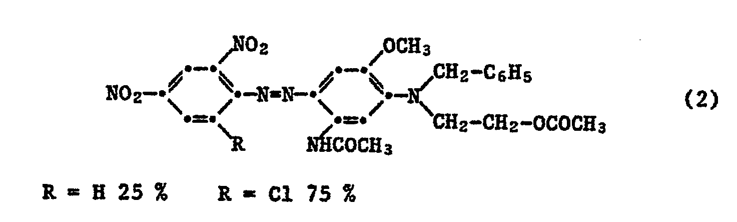
1,3 % Oxyligninsulfonat
3,3 % Blockpolymere
20,0 % Feuchthalter (1,2-Propylenglycol)
42,0 % Wasser
und
11,5 g Polyacrylsäure Lösung 3 % mit einem Molgewicht von 7,5-10⁵
11,5 g Wasser werden mit NaOH-Lösung auf pH 7,1 gebracht.

Die Viskosität der dispergatorarmen Formulierung steigt von 20 mPa.s auf 1000 mPa.s an. Die Teilchenverteilung liegt zwischen 0,1-5 µm. Verwendet man als Alkali Triäthanolamin und stellt den pH auf 7,5, erhält man 1460 mPa.s.

Lagert man die Dispersion einige Monate, tritt praktisch kein Sedimentieren ein. Die verdickte Flüssigform bleibt homogen.

Rührt man nun 2 % Na-Naphthalinsulfonat-Kondensationsprodukt bezogen auf die Flüssigform ein, kehrt die Viskosität wieder in den Startbereich zurück.

Beispiel 5: 100 Teile des verflüssigten Farbstoffpräparates gemäss Beispiel 4 werden in 900 Teilen Wasser dispergiert. Mit dieser Flotte klotzt man ein Polyester/Cellulose-Gewebe mit einer Flottenaufnahme von 70 %, unterwirft das Gewebe anschliessend einer Zwischentrocknung und thermosoliert dann bei 210_{°}C. Man erhält eine egale, sprickelfreie marineblaue Färbung.

Beispiele 6-8: Die hohe Leistungsfähigkeit des vorgeschlagenen Verdickersystems wird sichtbar an ungemahlenen, groben Dispersionen (Rohkonzentrate) mit einer Teilchenverteilung zwischen 1 und 50 µm, die aus Synthesesuspensionen durch Membranprozesse aufkonzentriert wurden. Nachfolgende Tabelle stellt dies dar:

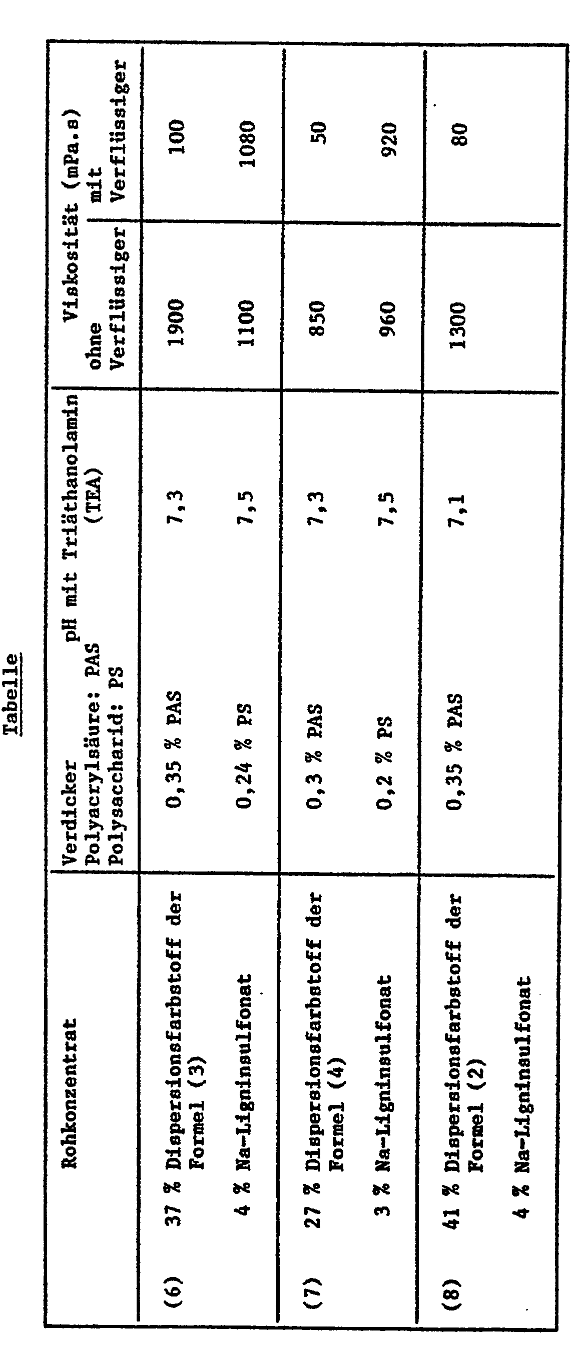

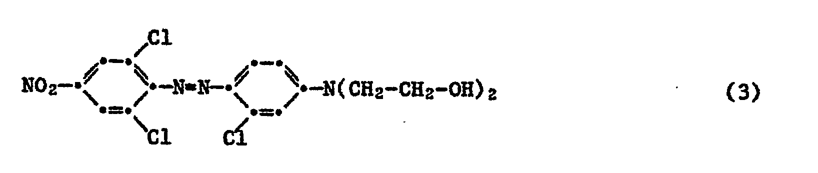

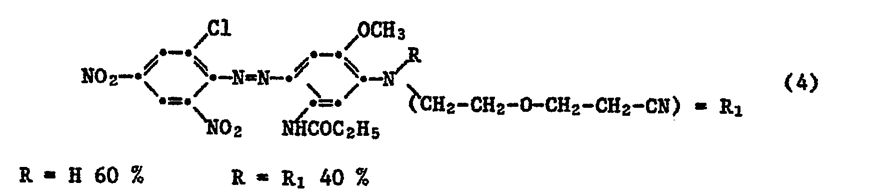

Es wurden ein elektrolytempfindlicher Verdicker auf Basis Polyacrylsäure mit einem elektrolyt-unempfindlichen Verdicker auf Basis eines Polysaccharides verglichen. Als Verflüssiger diente wieder das Kondensationsprodukt von Na-Naphthalinsulfonat (2% auf Suspension).

Im Gegensatz zu dem PAS-Typ lässt sich die PS-verdickte Dispersion nicht mehr verflüssigen. Trotz der sehr groben Dispersion trat nach mehrwöchigem Lagern kein Sediment auf. Die unverdickte Suspension dagegen hatte sich völlig in 2 Phasen getrennt, wobei der Bodensatz den gesamten Feststoff als harte Schicht enthielt. Nach der Verflüssigung der PAS-Suspension liess sich diese dagegen leicht weiterverarbeiten.

### Beispiel 9:

15 Teile des roten Küpenfarbstoffes mit der Formel 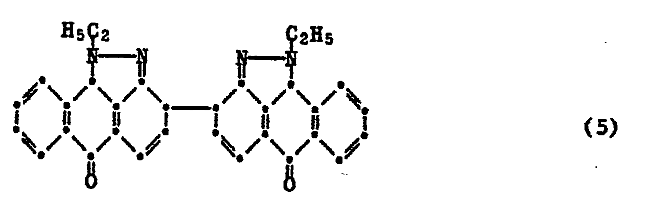
3 Teile eines Triäthanolaminligninsulfonates
2 Teile eines nichtionogenen Blockpolymeren
10 Teile Aethylenglycol
0,17 Teile einer Polyacrylsäure, MG 4.10⁶ als Verdicker
69,83 Teile H₂0
werden in einer Attritormühle vermahlen, bis die Teilchengrösse des Farbstoffes im Bereich von 0,1-5 J.lm liegt. Nach Ausladen aus der Mühle beträgt die Viskosität der flüssigen Formulierung 1400 mPa.s, gemessen mit einem Brookfield-Viskosimeter bei 30 Upm, 20_{°}C.

Die gleiche Formulierung ohne den Verdicker erreicht eine Viskosität von 290 mPa.s. Im Gegensatz zu der verdickten Form sedimentieren die groben Teilchen bei der Lagerung, so dass erhebliche Farbstärkedifferenzen im vertikalen Profil auftreten.

Die verdickte, homogen gebliebene Flüssigform kann nach beliebig langer Lagerung durch einfaches Einrühren von 1 % Na-Naphthalinsulfonat-Kondensationsprodukt auf 310 mPa.s verflüssigt werden. Die Verwendung in der Färberei ist damit auch bei Einsatz einer automatischen Dosierung gewährleistet.

### Beispiel 10:

100 Teile der flüssigen Formulierung eines optischen Aufhellers der folgenden Zusammensetzung: 20 Teile opt. Aufheller mit der Formel 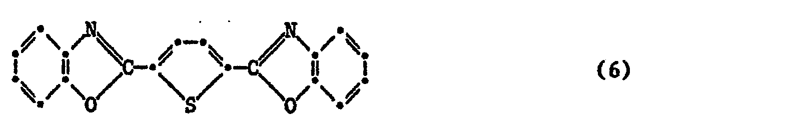
3 Teile eines nichtionogenen Dispergators, wie z.B. Nonylphenoläthoxylat (HLB 15-18) oder eines entsprechenden Blockpolmeren, sowie
67 Teile Wasser werden in einer Attritormühle vermahlen, bis die Teilchengrösse zwischen 0,1 und 10 µm liegt.
Anschliessend mischt man
10 Teile einer 2%igen Stammlösung einer Polyacrylsäure mit einem Molgewicht von 750000 in einem Becherglas mit Rührer zu, bis die Dispersion homogen ist. Hierdurch steigt die Viskosität von 70 mPa.s auf 1100mPa.s.

Beim mehrmonatigen Lagern der so verdickten Flüssigform tritt kein unerwünschtes Sedimentieren auf. Die Aktivsubstanz bleibt vertikal in homogener Verteilung.

Kurz vor Gebrauch des Präparates rührt man 0,5 Teile NaCl ein. Es entsteht eine homogene, gut giess- und pumpbare Form mit der ursprünglichen Viskosität des unverdickten Präparates.

Setzt man in obigem Beispiel 52 statt 67 Teile H₂0 ein und 25 statt 10 Teile der 2%igen Stammlösung der Polyacrylsäure, so erhält man eine Flüssigform des optischen Aufhellers mit einer Viskosität von 2200 mPa.s. Mit 2 % NaCl kehrt die Viskosität auf 65 mPa.s zurück.

### Beispiel 11:

100 Teile der Flüssigform eines UV-Absorbers stellt man folgendermassen her: 35 Teile des Absorbers der Formel 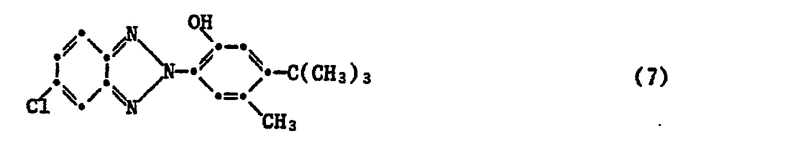
2 Teile eines Alkylphenoläthoxylates oder
entsprechenden Blockpolymeres mit HLB-Wert um 18, sowie 58 Teile Wasser
werden in einer Korundscheibenmühle gemahlen bis die Teilchengrössen zwischen 1-20 µm liegt.
Bei der resultierenden Viskosität von 100 mPa.s neigen die grösseren Teilchen zum Sedimentieren beim Lagern. Aus diesem Grund fügt man anschliessend
5 Teile einer 1%igen Stammlösung einer Polyacrylsäure mit einem Molgewicht von 4.10⁶ in einem Becherglas unter Rühren zu, bis der Verdicker homogen verteilt ist. Hierdurch steigt die Viskosität auf 2000 mPa.s an.

Bei mehrmonatigem Lagern tritt kein unerwünschtes Absetzen der Aktivsubstanz auf. Die Dispersion bleibt homogen. Sie lässt sich leicht kurz vor dem Verbrauch mit 0,5 Teilen Naphthalinsulfonsäure-Formaldehydkondensat-Na-Salz, welches einige Minuten eingerührt wird, verflüssigen. Die so erreichte ursprüngliche Viskosität garantiert gute Dosierbarkeit für die Verwendung im Färbebad.

## Patentansprüche

1. Lagerstabile wäßrige Präparate von in Wasser unlöslichen bis schwerlöslichen Feststoffen, dadurch gekennzeichnet, daß diese neben einem Dispergator ein elektrolytempfindliches Verdickungsmittel enthalten und eine Viskosität von 1· 103 bis 1 106 mPa s aufweisen.

2. Präparate gemäß Anspruch 1, dadurch gekennzeichnet, daß die Teilchengröße der Feststoffe unter 50 µm liegt.

3. Präparate gemäß Anspruch 1, dadurch gekennzeichnet, daß dieses als Feststoffe Farbstoffe, UV-Absorber, Textil- und Papierhilfsmittel, Schädlingsbekämpfungsmittel, Photochemikalien, Lederchemikalien, Kunststoffe oder Kunststoffadditive in reiner oder auch verschnittener Form enthalten.

4. Präparate gemäß Anspruch 1 von in Wasser unlöslichen bis schwerlöslichen Farbstoffen einer Teilchengröße <10 µm, dadurch gekennzeichnet, daß diese neben einem nichtionischen Dispergator ein elektrolytempfindliches synthetisches Verdickungsmittel enthalten und eine Viskosität von 1 · 103 bis 1· 106 mPa s aufweisen.

5. Präparate gemäß Anspruch 1 und 4, dadurch gekennzeichnet, daß diese eine Viskosität von 1 103 bis 1 . 104 mPa s aufweisen.

6. Präparate gemäß Anspruch 1, dadurch gekennzeichnet, daß diese als Verdicker eine Polyacrylsäure mit einem Molgewicht von 1 10⁵ bis 1 107, ein Polyacrylamid, Polymethacrylamid oder ein Homo- oder Copolymerisat aus Acrylamid und Methacrylamid oder Acrylsäure mit einem Molgewicht von 1.105 bis 1·10⁷ oder ein Copolymerisat aus Maleinsäureanhydrid und Aethylen mit einem Molgewicht von 1.103 bis 1.107 oder ein Gemisch dieser Verdickungsmittel enthalten.

7. Präparate gemäss Anspruch 1 und 4, dadurch gekennzeichnet, dass diese als synthetischen Verdicker eine Polyacrylsäure mit einem Molgewicht von 5.10⁵ bis 6-10⁶, ein Polyacrylamid, Polymethacrylamid oder ein Homo- oder Copolymerisat aus Acrylamid und Methacrylamid oder Acrylsäure mit einem Molgewicht von 1·10⁶ bis 4·10⁶ oder ein Copolymerisat aus Maleinsäureanhydrid und Aethylen mit einem Molgewicht von 8-103 bis 1·10⁶ oder ein Gemisch dieser Verdickungsmittel enthalten.

8. Präparate gemäss den Ansprüchen 7 und 8, dadurch gekennzeichent, dass diese als Verdicker eine Polyacrylsäure mit einem Molgewicht von 8-105 bis 1.106 enthalten.

9. Präparate gemäss den Ansprüchen 1 bis 9, dadurch gekennzeichnet, dass diese, bezogen auf das Präparat, 0,01 bis 10 Gew.-%, insbesondere 0,1 bis 5 Gew.-% Verdickungsmittel enthalten.

10. Präparate gemäss den Ansprüchen 1 bis 10, dadurch gekennzeichnet, dass diese nichtionische, amphotere, kationische oder anionische Dispergatoren oder Dispergatorgemische enthalten.

11. Präparate gemäss Anspruch 11, dadurch gekennzeichnet, dass diese als nichtionischen Dispergator ein Aethylenoxid/Propylenoxid-Blockpolymer der Formel 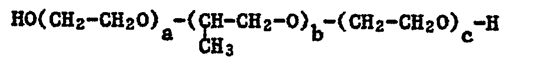 enthalten, worin die Summe der Indices a und c eine Zahl zwischen 200 und 400 und b eine Zahl zwischen 20 und 100 bedeutet.

12. Präparate gemäss Anspruch 11, dadurch gekennzeichnet, dass diese als anionischen Dispergator Kondensationsprodukte von aromatischen Sulfonsäuren mit Formaldehyd, wie Kondensationsprodukte aus Formaldehyd und Naphthalinsulfonsäuren oder aus Formaldehyd, Naphthalinsulfonsäure und Benzolsulfonsäure, oder ein Kondensationsprodukt aus Rohkresol, Formaldehyd und Naphthalinsulfonsäure enthalten.

13. Präparate gemäss Anspruch 11, dadurch gekennzeichnet, dass diese als kationischen Dispergator höhere Alkylreste aufweisende quaternäre Ammoniumverbindungen der Formel 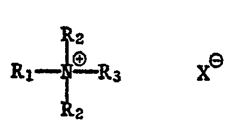 enthalten, wobei die Substituenten Ri bis R₃ und das Symbol X^{e} die folgende Bedeutung haben:
Ri ein gesättigter und/oder ungesättigter Alkylrest mit 8 bis 22 Kohlenstoffatomen;
R₂ unabhängig voneinander jeweils ein Alkylrest mit 1 bis 4 Kohlenstoffatomen oder eine Polyalkylenoxidkette mit 3 bis 30 Aethylenoxid- und/oder Propylenoxideinheiten oder Aethylenoxid- und Styroloxideinheiten;
R₃ ein gegebenenfalls durch eine Hydroxy-, Methoxy- oder Aethoxygruppe oder durch einen Carbamoyl- oder Phenylrest substituierter Alkylrest mit 1 bis 4 Kohlenstoffatomen;
X^{e} das Anion einer organischen oder anorganischen Säure, wie z.B. Chlorid, Bromid, Sulfat oder Methosulfat.

14. Präparate gemäss den Ansprüchen 1 bis 14, dadurch gekennzeichnet, dass diese als weitere Zusätze Feuchthaltemittel, hydrotrope Mittel, Antimikrobika, Fungicide, Antischaummittel, Sequestrierungsmittel und/oder den pH-Wert regulierende Zusätze enthalten.

15. Präparate gemäss Anspruch 1, dadurch gekennzeichnet, dass diese 10 bis 60 Gew.-%, insbesondere 20 bis 50 Gew.-% Feststoff, 0,5 bis 25 Gew.-%, insbesondere 2 bis 15 Gew.-% Dispergator oder Dispergatorgemisch, 0,001 bis 5 Gew.-%, insbesondere 0,01 bis 1 Gew.-% synthetisches Verdickungsmittel, 5 bis 20 Gew.-% Feuchthaltemittel und 20 bis 70 Gew.-% Wasser enthalten.

16. Präparate gemäss Anspruch 1 und 4, dadurch gekennzeichnet, dass diese 10 bis 60 Gew.-%, insbesondere 20 bis 50 Gew.-% Farbstoff, 0,5 bis 15 Gew.-%, insbesondere 2 bis 10 Gew.-% nichtionischen Dispergator, 0,1 bis 5 Gew.-%, insbesondere 0,5 bis 3 Gew.-% anionischen Dispergator, 0,001 bis 5 Gew.-%, insbesondere 0,01 bis 1 Gew.-% synthetisches Verdickungsmittel, 5 bis 20 Gew.-% Feuchthaltemittel und 20 bis 70 Gew.-% Wasser enthalten.

17. Präparate gemäss den Ansprüchen 16 und 17, dadurch gekennzeichnet, dass diese als weitere Zusätze in einer Gasamtkonzentration von 0,1 bis 5 Gew.-% Antischaummittel, hydrotrope Mittel, Antimikrobika, Sequestrierungsmittel und/oder zur pH-Wert/Viskositätseinstellung eine Carbonsäure bzw. ein Alkalimetallhydroxid oder Ammoniak enthalten.

18. Verfahren zur Herstellung der Präparate gemäss Anspruch 1, dadurch gekennzeichnet, dass man einen in Wasser unlöslichen bis schwerlöslichen Feststoff in Gegenwart eines nichtionischen, amphoteren, kationischen oder anionischen Dispergators, oder eines Dispergatorgemisches in eine feinteilige Form überführt und mit einem elektrolytempfindlichen Verdickungsmittel und gegebenenfalls in Feststoffpräparaten üblicherweise enthaltenen Komponenten vermischt, oder indem man in eine feinteilige, Dispergator, sowie gegebenenfalls übliche Zusätze enthaltende Feststoffpräparation ein elektrolytempfindliches Verdickungsmittel einarbeitet.

19. Verfahren zur Herstellung der Präparate gemäss Anspruch 4, dadurch gekennzeichnet, dass man einen in Wasser unlöslichen bis schwerlöslichen Farbstoff in Gegenwart eines nichtionischen Dispergators in eine feinteilige Form überführt und mit einem elektrolytempfindlichen Verdickungsmittel und gegebenenfalls in Farbstoffpräparaten üblicherweise enthaltenen Komponenten vermischt, oder indem man in eine feinteilige, nichtionischen Dispergator, sowie gegebenenfalls übliche Zusätze enthaltende Farbstoffpräparation ein elektrolytempfindliches Verdickungsmittel einarbeitet.

20. Verwendung der Präparate gemäss Anspruch 1 nach deren Verflüssigung durch Elektrolytzugabe zum Behandeln von Materialien.

## Claims

1. A storage-stable aqueous formulation of a water-insoluble or sparingly water-soluble solid, which formulation contains an electrolyte-sensitive thickener in addition to a dispersant and has a viscosity of 1 103 to 1 · 106 mPa s.

2. A formulation according to claim 1, wherein the particle size of the solid is less than 50 µm.

3. A formulation according to claim 1, which contains as solid a dye, a UV absorber, a textile or paper auxiliary, a pesticide, a photochemical, a leather chemical, a plastic or a plastics additive, in pure or also dilute form.

4. A formulation according to claim 1 of a water-insoluble or sparingly water-soluble dye having a par- tide of <10 µm, which formulation contains an electrolyte-sensitive thickener in addition to a non-ionic dispersant and has a viscositiy of 1 103 to 1· 10⁶ mPa s.

5. A formulation according to either claim 1 or claim 4, which has a viscosity of 1 · 103 to 1 104 mPa · s.

6. A formulation according to claim 1, which contains as thickener a polyacrylic acid having a molecular weight of 1 · 105 to 1 107, a polyacrylamide, polymethacrylamide or a homo- or copolymer of acrylamide and methacrylamide or acrylic acid having a molecular weight of 1 · 10⁵ to 1 · 107, or a copolymer of maleic anhydride and ethylene having a molecular weight of 1 · 103 to 1 · 107, or a mixture of such thickeners.

7. A formulation according to either claim 1 or claim 4, which contains as synthetic thickener a polyacrylic acid having a molecular weight of 5 105 to 6 106, a polyacrylamide, polymethacrylamide or a homo- or copolymer of acrylamide and methacrylamide or acrylic acid having a molecular weight of 1 106 to 4 · 106, or a copolymer of maleic anhydride and ethylene having a molecular weight of 8 · 103 to 1 · 106, or a mixture of such thickeners.

8. A formulation according to either claim 7 or claim 8, which contains as thickener a polyacrylic acid having a molecular weight of 8 105 to 1 · 106.

9. A formulation according to any one of claims 1 to 9, which contains 0.01 to 10% by weight, in particular 0.1 to 5% by weight, of thickener, based on said formulation.

10. A formulation according to any one of claims 1 to 10, which contains a non-ionic, amphoteric, cationic or anionic dispersant or a mixture of such dispersants.

11. A formulation according to claim 11, which contains as non-ionic dispersant an ethylene ox- ide/propylene oxide block polymer of formula 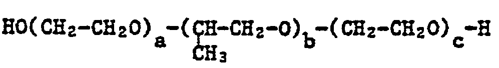 in which the sum of the indices a and c is number between 200 and 400 and b is a number between 20 and 100.

12. A formulation according to claim 11, which contains as anionic dispersant a condensation product of an aromatic sulfonic acid with formaldehyde, such as a condensation product of formaldehyde and naphthalenesulfonic acid, or of formaldehyde, naphthalenesulfonic acid and benzenesulfonic acid, or a condensation product of crude cresol, formaldehyde and naphthalenesulfonic acid.

13. A formulation according to claim 11, which contains as cationic dispersant a quaternary ammonium compound containing higher alkyl radicals and having the formula 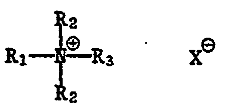 where the substituents R₁ to R₃ and the symbol X^{e} are as defined below:
R₁ is a saturated and/or unsaturated alkyl radical having 8 to 22 carbon atoms;
R₂ independently of one another are each an alkyl radical having 1 to 4 carbon atoms or a polyalkylene oxide chain having 3 to 30 ethylene oxide and/or propylene oxide units or ethylene oxide and styrene oxide units;
R₃ is an alkyl radical having 1 to 4 carbon atoms and which is unsubstituted or substituted by a hydroxyl, methoxy or ethoxy group or by a carbamoyl or phenyl radical;
X⁶ is the anion of an organic or inorganic acid, such as chloride, bromide, sulfate or methosulfate.

14. A formulation according to any one of claims 1 to 14, which contains as further additives a humectant, a hydrotropic agent, a microbicide, a fungicide, an antifoam, a chelating agent and/or an additive for regulating the pH.

15. A formulation according to claim 1, which contains 10 to 60% by weight, in particular 20 to 50% by weight, of a solid, 0.5 to 25% by weight, in particular 2 to 15% by weight, of a dispersant or mixture of dispersants, 0.001 to 5% by weight, in particular 0.01 to 1% by weight, of a synthetic thickener, 5 to 20% by weight of humectant and 20 to 70% by weight of water.

16. A formulation according to either claim 4, which contains 10 to 60% by weight, in particular 20 to 50% by weight, of a dye, 0.5 to 15% by weight, in particular 2 to 10% by weight of a non-ionic dispersant, 0.1 to 5% by weight, in particular 0.5 to 3% by weight, of an anionic dispersant, 0.001 to 5% by weight, in particular 0.01 to 1% by weight, of a synthetic thickener, 5 to 20% by weight of a humectant and 20 to 70% by weight of water.

17. A formulation according to either claim 16 or claim 17, which contains as further additives, in a total concentration of 0.1 to 5% by weight, an antifoam, a hydrotropic agent, a microbicide, a chelating agent and/or a carboxylic acid or an alkali metal hydroxide or ammonia for adjusting the pH/viscosity.

18. A process for the preparation of a formulation according to claim 1, which comprises converting a water-insoluble or sparingly water-soluble solid, in the presence of a non-ionic, amphoteric, cationic or anionic dispersant, or of a mixture of such dispersants, into a finely dispersed form and adding an electrolyte-sensitive thickener and optional customary components of solids formulations, or adding an electrolyte-sensitive thickener to a finely dispersed solids formulation which contains a dispersant and optional customary additives.

19. A process for the preparation of a formulation according to claim 6, which comprises converting a water-insoluble or sparingly water-soluble dye, in the presence of a non-ionic dispersant, into a finely dispersed form and adding an electrolyte-sensitive thickener and optional customary components of dye formulations, or adding an electrolyte-sensitive thickener to a finely dispersed dye formulation which contains a non-ionic dispersant and optional customary additives.

20. The use of a formulation according to claim 1 after dilution with electrolyte, for treating materials.

## Revendications

1. Compositions aqueuses, stables à la conservation, de matières solides peu solubles ou insolubles dans l'eau, caractérisées en ce qu'elles contiennent, avec un agent dispersant, un agent épaississant sensible aux électrolytes, et en ce qu'elles ont une viscosité de 1 x 10³ à 1 x 10⁶ mPa.s.

2. Compositions selon la revendication 1, caractérisées en ce que la taille de particules des matières solides est inférieure à 50 lim.

3. Compositions selon la revendication 1, caractérisées en ce qu'elles contiennent, comme matières solides, des colorants, des absorbeurs des rayonnements ultraviolets, des produits auxiliaires pour le textile ou le papier, des produits pesticides, des produits chimiques pour la photographie, des produits chimiques pour le cuir, des résines synthétiques ou des additifs pour résines synthétiques, à l'état pur ou à l'état de dilutions.

4. Compositions selon la revendication 1, de colorants peu solubles ou insolubles dans l'eau, ayant une taille de particules inférieure à 10 wm, caractérisées en ce qu'elles contiennent, avec un agent dispersant non-ionique, un agent épaississant synthétique sensible aux électrolytes et en ce qu'elles ont une viscosité de 1 x 10³ à 1 x 106 mPa.s.

5. Compositions selon les revendications 1 et 4, caractérisées en ce qu'elles ont une viscosité de 1 x 103 à 1 x 104 mPa.s.

6. Compositions selon la revendication 1, caractérisées en ce qu'elles contiennent, en tant qu'agent épaississant, un poly(acide acrylique) de masse moléculaire 1 x 10⁵ à 1 x 10⁷, un polyacrylamide, un polyméthacrylamide ou un homo- ou copolymère de l'acrylamide et du méthacrylamide ou de l'acide acrylique de masse moléculaire 1 x 105 à 1 x 107, ou un copolymère de l'anhydride maléique et de l'éthylène de masse moléculaire 1 x 103 à 1 x 107, ou un mélange de ces agents épaississants.

7. Compositions selon les revendications 1 et 4, caractérisées en ce qu'elles contiennent, en tant qu'agent épaississant synthétique, un poly(acide acrylique) de masse moléculaire 5 x 10⁵ à 6 x 10⁶, un polyacrylamide, un polyméthacrylamide ou un homo- ou copolymère de l'acrylamide et du méthacrylamide ou de l'acide acrylique de masse moléculaire 1 x 106 à 4 x 10⁶, ou un copolymère de l'anhydride maléique et de l'éthylène de masse moléculaire 8 x 10³ à 1 x 10⁶, ou un mélange de ces agents épaississants.

8. Compositions selon les revendications 6 et 7, caractérisées en ce qu'elles contiennent, en tant qu'agent épaississant, un poly(acide acrylique) de masse moléculaire 8 x 105 à 1 x 106.

9. Compositions selon les revendications 1 à 8, caractérisées en ce qu'elles contiennent de 0,01 à 10 % en poids, plus spécialement de 0,1 à 5 % en poids, d'agent épaississant, les pourcentages étant rapportés au poids de la composition.

10. Compositions selon les revendications 1 à 9, caractérisées en ce qu'elles contiennent des agents dispersants non-ioniques, amphotères, cationiques ou anioniques, ou des mélanges d'agents dispersants.

11. Compositions selon la revendication 10, caractérisées en ce qu'elles contiennent, en tant qu'agent dispersant non-ionique, un polymère séquencé d'oxyde d'éthylène/oxyde de propylène de formule : 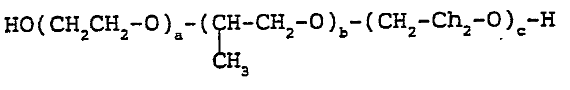 dans laquelle la somme des indices a et c est un nombre allant de 200 à 400 et b est un nombre allant de 20 à 100.

12. Compositions selon la revendication 10, caractérisées en ce qu'elles contiennent, en tant qu'agent dispersant anionique, des produits de condensation d'acides aromatiques sulfoniques et du formaldéhyde, par exemple des produits de condensation du formaldéhyde et d'acides naphtalènesulfoniques ou du formaldéhyde, d'acide naphtalènesulfonique et d'acide benzènesulfonique, ou un produit de condensation du crésol brut, du formaldéhyde et d'un acide naphtalènesulfonique.

13. Compositions selon la revendication 10, caractérisées en ce qu'elles contiennent, en tant qu'agent dispersant cationique, des composés ammonium quaternaire à groupes alkyle supérieurs, de formule : 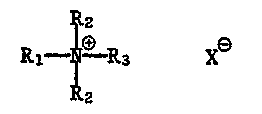 dans laquelle les symboles Rᵢ à R₃ et X^{e} ont les significations suivantes :
Rᵢ représente un groupe alkyle saturé et/ou insaturé en C₈-C₂₂,
les symboles R₂ représentent chacun, indépendamment l'un de l'autre, un groupe alkyle en C1-C4 ou une chaîne de poly(oxyde d'alkylène) contenant 3 à 30 motifs d'oxyde d'éthylène et/ou d'oxyde de propylène ou 3 à 30 motifs d'oxyde d'éthylène et d'oxyde de styrène,
R3 représente un groupe alkyle en C1 à C₄, éventuellement substitué par un groupe hydroxy, méthoxy ou éthoxy ou encore par un groupe carbamoyle ou phényle,
X^{e} représente l'anion d'un acide organique ou minéral, par exemple un anion chlorure, bromure, sulfate ou méthylsulfate.

14. Compositions selon les revendications 1 à 13, caractérisées en ce qu'elles contiennent, en tant qu'autres additifs, des agents de rétention de l'humidité, des agents hydrotropes, des agents antimicrobiens, des fongicides, des agents anti-mousse, des agents séquestrants et/ou des additifs pour le réglage du pH.

15. Compositions selon la revendication 1, caractérisées en ce qu'elles contiennent de 10 à 60 % en poids, plus spécialement de 20 à 50 % en poids, d'une matière solide, de 0,5 à 25 % en poids, plus spécialement de 2 à 15 % en poids, d'un agent dispersant ou d'un mélange d'agents dispersants, de 0,001 à 5 % en poids, plus spécialement de 0,01 à 10 % en poids, d'un agent épaississant synthétique, de 5 à 20 % en poids d'un agent de rétention de l'humidité et de 20 à 70 % en poids d'eau.

16. Compositions selon les revendications 1 et 4, caractérisées en ce qu'elles contiennent de 10 à 60 % en poids, plus spécialement de 20 à 50 % en poids, d'un colorant, de 0,5 à 15 % en poids, plus spécialement de 2 à 10 % en poids, d'un agent dispersant non-ionique, de 0,1 à 5 % en poids, plus spécialement de 0,5 à 3 % en poids, d'un agent dispersant anionique, de 0,001 à 5 % en poids, plus spécialement de 0,01 à 1 % en poids d'un agent épaississant synthétique, de 5 à 20 % en poids d'un agent de rétention de l'humidité et de 20 à 70 % en poids d'eau.

17. Compositions selon les revendications 15 et 16, caractérisées en ce qu'elles contiennent, en tant qu'autres additifs, à une concentration globale de 0,1 à 5 % en poids, des agents anti-mousse, des agents hydrotropes, des agents antimicrobiens, des agents séquestrants, et/ou un acide carboxylique ou un hydroxyde de métal alcalin ou de l'ammoniaque pour le réglage du pH et de la viscosité.

18. Procédé de préparation des compositions selon la revendication 1, caractérisé en ce que l'on met à l'état de fines particules une matière solide peu soluble ou insoluble dans l'eau, en présence d'un agent dispersant, non-ionique, amphotère, cationique ou anionique, ou d'un mélange d'agents dispersants, et on mélange avec un agent épaississant sensible aux électrolytes et le cas échéant des composants figurant habituellement dans des compositions de matières solides, ou bien en ce que l'on incorpore un agent épaississant sensible aux électrolytes dans une composition d'une matière solide en fines particules contenant un agent dispersant et le cas échéant des additifs usuels.

19. Procédé de préparation des compositions selon la revendication 4, caractérisé en ce que l'on met un colorant peu soluble ou insoluble dans l'eau à l'état de fines particules, en présence d'un agent dispersant non-ionique et on mélange avec un agent épaississant sensible aux électrolytes et le cas échéant des composants usuels pour les compositions de colorants, ou bien en ce que l'on incorpore un agent épaississant sensible aux électrolytes dans une composition de colorant en fines particules contenant un agent dispersant non-ionique et le cas échéant des additifs usuels.

20. Utilisation des compositions selon la revendication 1, après leur fluidification par addition d'électrolytes, pour le traitement de matières.
